# EUROPÄISCHE PATENTSCHRIFT

(11) **EP 3 789 186 B1**
(45) Veröffentlichungstag und Bekanntmachung des Hinweises auf die Patenterteilung: **03.05.2023**
(21) Anmeldenummer: 20188334.5
(22) Anmeldetag: 29.07.2020
(51) Int. Cl.: B29C 65/08, B23K 20/10

(54) **ULTRASCHALLBEARBEITUNGSVORRICHTUNG**
ULTRASONIC TREATMENT DEVICE
DISPOSITIF DE TRAITEMENT PAR ULTRASONS

(30) Priorität: 05.09.2019 DE 102019123786
(43) Veröffentlichungstag der Anmeldung: 10.03.2021
(73) Patentinhaber: MS Ultraschall Technologie GmbH, 78549 Spaichingen (DE)
(72) Erfinder: Krell, Volker, 78579 Neuhausen ob Eck (DE)
(74) Vertreter: Manitz Finsterwald Patent- und Rechtsanwaltspartnerschaft mbB

(56) Entgegenhaltungen:
- DE-A1- 10 331 064
- CORNELIA E. DEMERS: "Fatigue strength degradation of E-glass FRP composites and carbon FRP composites", CONSTRUCTION AND BUILDING MATERIALS, Bd. 12, Nr. 5, 1. Juli 1998 (1998-07-01), Seiten 311-318, XP055762361, Netherlands ISSN: 0950-0618, DOI: 10.1016/S0950-0618(98)00012-9

## Beschreibung

Die vorliegende Erfindung betrifft eine Ultraschallbearbeitungsvorrichtung nach dem Oberbegriff des Anspruchs 1, umfassend eine Sonotrode, die auf einer Basis in Längsrichtung verschieblich gelagert ist, wobei die Lagerung zumindest zwei Blattfedern umfasst, die an zwei gegenüberliegenden Seiten eingespannt sind, aus faserverstärktem Kunststoff hergestellt sind und die Sonotrode mit der Basis gelenkig verbinden. Eine solche Vorrichtung ist beispielsweise aus der DE 103 31 064 A1 bekannt. Aus dem Artikel Cornelia E Demers: "Fatigue strength degradation of E-glass FRP composites and carbon FRP composites", CON-STRUCTION AND BUILDING MATERIALS, Bd. 12, Nr. 5, 1. Juli 1998, Seiten 311-318, XP055762361, Netherlands, ISSN: 0950-0618, DOI: 10.1016/S0950-0618(98)00012-9 sind Ermüdungstests an Bauteilen für Brücken bekannt.

Mit Hilfe eines Stellglieds kann die Sonotrode relativ zu der Basis verschoben werden, wobei durch die Lagerung eine spielfreie Führung erreicht werden kann und gleichzeitig geringe Kräfte für eine erforderliche Hubbewegung ausreichend sind. Die Verschiebung der Sonotrode relativ zu der Basis erfolgt zwar unter einem vergleichsweise geringen Hub, jedoch mit einer hohen Wiederholfrequenz, wodurch die Blattfedern im Langzeitbetrieb stark beansprucht werden.

Es ist deshalb die Aufgabe der vorliegenden Erfindung, eine Vorrichtung mit dem Oberbegriff des Anspruchs 1 zu schaffen, die eine verbesserte Standzeit aufweist.

Die Lösung dieser Aufgabe erfolgt durch die Merkmale des Anspruchs 1 und insbesondere dadurch, dass die Blattfedern aus carbonfaserverstärktem Kunststoff hergestellt sind und ein anisotrop verteiltes Elastizitätsmodul aufweisen.

Durch Untersuchungen hat sich nämlich herausgestellt, dass im Dauerbetrieb der Bereich der Blattfeder unmittelbar neben der Einspannung einer starken Wechselbelastung unterliegt, so dass im Material der Blattfedern Risse bis hin zum Bruch auftreten können. Durch die erfindungsgemäß vorgesehene Herstellung der Blattfedern aus carbonfaserverstärktem Kunststoff und durch die anisotrope Verteilung des Elastizitätmoduls der Blattfedern kann das Elastizitätsmodul in unterschiedlichen Belastungsrichtungen variiert werden.

Da im Bereich der Einspannung eine Verstärkung vorgesehen ist, z.B. bzw. eine gezielte Aufdickung im Bereich der Einspannung, lassen sich die auftretenden Biegespannungen deutlich reduzieren bzw. verteilen.

Vorteilhafte Ausführungsformen der Erfindung sind in der Beschreibung, der Zeichnung sowie den Unteransprüchen beschrieben.

Sofern das Elastizitätsmodul in Richtung der Dicke der Blattfedern geringer als quer dazu ausgebildet ist, lässt sich eine besonders gute Anpassung an die Anwendung bei Ultraschallbearbeitungsvorrichtungen erzielen, da es bei derartigen Vorrichtungen dazu kommen kann, dass die Sonotrode nach Verschieben in Richtung eines zu verschweißenden Werkstücks leicht verkippt, so dass in der Richtung der Ebene der Blattfedern vergleichsweise hohe Biegespannungen auftreten. Demgegenüber soll die Steifheit der Blattfeder in Auslenkungsrichtung, d.h. in Längsrichtung, gering sein.

Eine anisotrope Verteilung des Elastizitätsmoduls lässt sich auf vorteilhafte Weise dadurch erreichen, dass die Blattfedern Carbonfasern aufweisen, die unter einem Winkel von 45° zu den vier Seiten der Blattfeder orientiert sind.

Nach einer weiteren vorteilhaften Ausführungsform kann die Verstärkung in Richtung der Mitte der Blattfeder abnehmen, wobei insbesondere eine gleichmäßige Abnahme in Richtung der Mitte der Blattfeder vorteilhaft sein kann. Dies bedeutet, dass die Blattfeder an zwei gegenüberliegenden Rändern stärker ausgebildet ist als in ihrer Mitte. Besonders vorteilhaft kann hier eine solche Ausbildung der Verstärkung sein, dass sich eine konstante Verteilung der Biegespannung über die gesamte Länge des federnden Bereichs einstellt.

Nach einer weiteren vorteilhaften Ausführungsform kann die Verstärkung durch zusätzliche Faserlagen gebildet sein, da durch derartige zusätzliche Faserlagen das Elastizitätsmodul im Bereich der Einspannung variiert werden kann.

Nach einer weiteren vorteilhaften Ausführungsform kann die Verstärkung Faserlagen mit verschiedener Orientierung aufweisen, da hierdurch das Elastizitätsmodul auch in unterschiedlichen Belastungsrichtungen unterschiedlich eingestellt werden kann. So ist es beispielsweise möglich, die eigentliche Blattfeder mit Faserlagen unter einem Winkel von zum Beispiel 45° zu belegen, wobei eine bestimmte Anzahl von Lagen aufeinandergeschichtet wird, beispielsweise zwei bis sieben Lagen, wobei optional zusätzlich zwei oder vier Verstärkungslagen in den Randbereich eingebracht werden können, an dem die Blattfeder verspannt ist.

Nach einer weiteren vorteilhaften Ausführungsform kann die Verstärkung Faserlagen aufweisen, deren Faseranzahl pro Flächeneinheit variiert und insbesondere in einer Richtung, nämlich in Richtung der Mitte zwischen den beiden Einspannungen, abnimmt. Auch hierdurch lassen sich optimierte Querschnitte erzielen.

Sofern die Blattfeder unidirektionale Faserlagen aufweist, kann durch Faserlagen mit unterschiedlichen Längen ein Verstärkungsbereich ausgebildet werden. Wenn Faserlagen mit Fasern unter 0° und 90° verwendet werden, kann durch Entfernen einiger 90° Fasern ein besonders gleichmäßiger Übergang ermöglicht werden. Nach einer weiteren vorteilhaften Ausführungsform können Faserlagen der Verstärkung zwischen Faserlagen eingebettet sein. Gute Ergebnisse haben sich auch gezeigt, wenn die Faserlagen der Verstärkung äußerste Faserlagen der Blattfeder darstellen.

Auch kann es vorteilhaft sein, wenn die beiden Blattfedern nicht vorgespannt sind, da in diesem Fall die für eine Auslenkung erforderlichen Kräfte minimiert sind.

Nach einer weiteren vorteilhaften Ausführungsform kann zumindest eine Blattfeder im Bereich einer Einspannung formschlüssig fixiert sein. Hierzu können beispielsweise Stifte oder Passfedern vorgesehen sein, welche eine formschlüssige Verbindung zwischen der Einspannung und der Blattfeder herstellen, um auch dann eine sichere Fixierung der Blattfeder zu erreichen, falls diese nach längerer Betriebszeit ihre äußere Kontur, d.h. ihre Abmessungen oder ihre innere Beschaffenheit verändert haben sollte. Eine formschlüssige Verbindung zwischen der Blattfeder und der Einspannung kann auch durch eine Passschraube erreicht werden, die spielfrei durch eine Öffnung in der Blattfeder gesteckt ist. Weiterhin kann es vorteilhaft sein, wenn eine spezielle Gestaltung der Faseranordnung um eine solche Öffnung der Blattfeder herum erfolgt, um eventuelle Scherspannungen in verschiedene Richtungen aufzunehmen. Hierzu kann es beispielsweise vorteilhaft sein, wenn im Bereich der Öffnung für die formschlüssige Fixierung der Blattfeder die Fasern unter 0°, 45° und 90° angeordnet sind. Auch kann eine ringförmige Anordnung der Fasern um die Öffnung herum oder eine Kombination mit einer solchen Anordnung vorteilhaft sein.

Nachfolgend wird die vorliegende Erfindung beispielhaft anhand von vorteilhaften Ausführungsformen und unter Bezugnahme auf die beigefügten Zeichnungen beschrieben.

Es zeigen:
- Fig. 1: eine teilweise geschnittene Seitenansicht auf eine Ultraschallbearbeitungsvorrichtung;
- Fig. 2: eine Illustration einer Blattfeder mit einer Faserlage aus Carbonfasern;
- Fig. 3: eine Illustration von Faserlagen einer Blattfeder mit Verstärkung;
- Fig. 4: eine weitere Illustration einer Blattfeder mit Faserlagen und Verstärkung;
- Fig. 5: eine Schnittansicht durch eine Ausführungsform von Faserlagen mit Verstärkung; und
- Fig. 6: eine Schnittansicht einer weiteren Ausführungsform von Faserlagen mit Verstärkung.

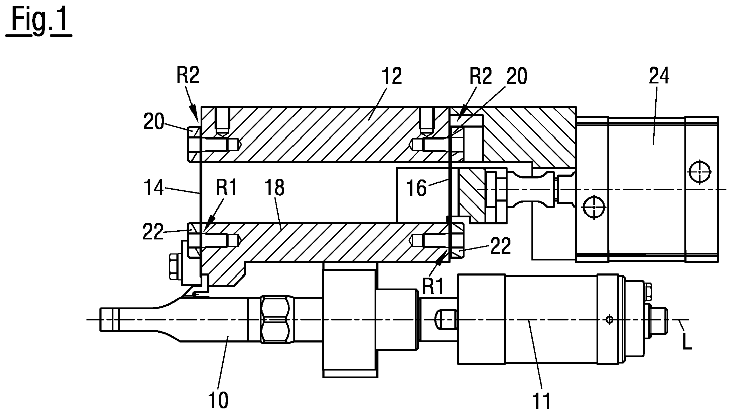

Fig. 1 zeigt eine Ultraschallbearbeitungsvorrichtung, die eine Sonotrode 10 aufweist, welche auf einer Basis 12 in Längsrichtung, d.h. in Richtung der Längsachse L der Sonotrode 10 verschieblich gelagert ist. Die Lagerung besteht bei dem dargestellten Ausführungsbeispiel ausschließlich aus zwei Blattfedern 14 und 16, die rechteckig oder quadratisch ausgebildet sind, und die jeweils an zwei gegenüberliegenden Randbereichen R1 und R2 einerseits an einem Lagerteil 18 und andererseits an der Basis 12 eingespannt sind. Das Lagerteil 18 ist mit der Sonotrode 10 verbunden, die wiederum mit einem Konverter 11 in Verbindung steht.

Die Einspannung jeder Blattfeder 14 und 16 erfolgt an den beiden gegenüberliegenden Seiten R1 und R2 mit Hilfe eines Riegels 20, 22, der beispielsweise über drei (nicht dargestellte) Bolzen mit der Basis 12 bzw. dem Lagerteil 18 verschraubt ist.

Wie Fig. 1 weiterhin zeigt, ist an der Basis 12 ein Kurzhubzylinder 24 befestigt, mit dessen Hilfe das Lagerteil 18 (aufgrund der kurzen Hübe) parallel zu der Basis 12 in Richtung der Längsachse L verschoben werden kann, wobei die beiden Blattfedern 14 und 16 in eine gelenkige Verbindung zwischen Basis 12 und Lagerteil 18 herstellen.

Die beiden Blattfedern 14 und 16 weisen optional im Bereich der Einspannung, d.h. im Bereich der Riegel 22 und 24 eine Verstärkung auf, die in Fig. 1 nicht dargestellt ist und die sich in einen Bereich zwischen den beiden Einspannungen bzw. Riegeln 20 und 22 hineinerstrecken kann.

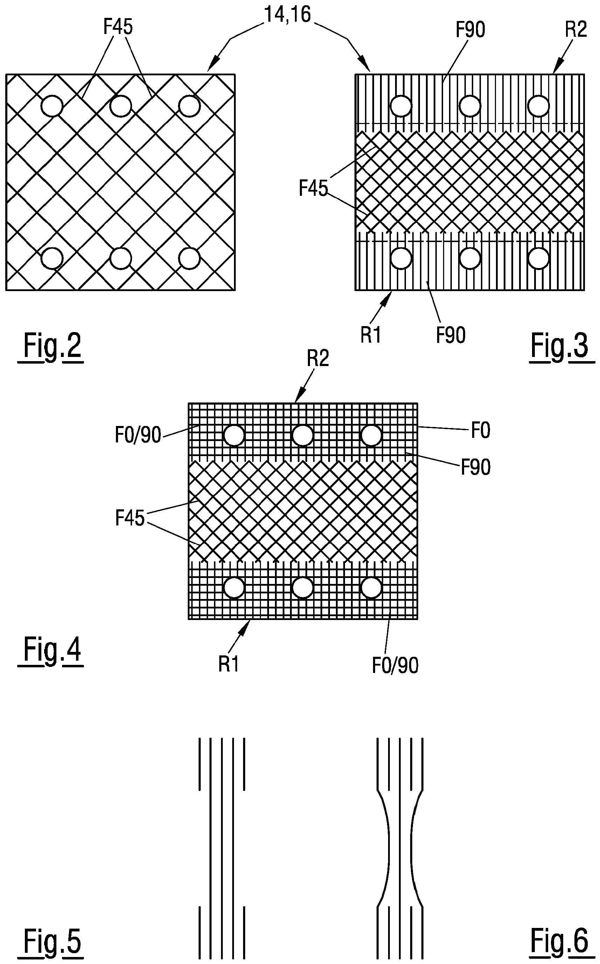

Fig. 2 verdeutlicht schematisch eine Draufsicht auf eine erfindungsgemäße Blattfeder 14 oder 16, die an ihren zwei gegenüberliegenden Seiten jeweils drei Öffnungen für einen Durchtritt der Schraubbolzen aufweisen. Bei dem dargestellten Ausführungsbeispiel ist die Blattfeder aus carbonfaserverstärktem Kunststoff hergestellt, da Carbonfasern ein zu Stahl ähnliches Elastizitätsmodul aufweisen. Durch eine gezielte Faserorientierung in den Bereichen der Einspannung kann das Elastizitätsmodul in unterschiedlichen Belastungsrichtungen variiert werden.

Bei dem in Fig. 2 dargestellten Ausführungsbeispiel ist hierzu in der Blattfeder ein Carbonfasergewebe mit Fasern F45 vorgesehen, die unter einem Winkel von 45° zu den vier Rändern der Blattfeder orientiert sind, wobei mehrere Lagen aufeinandergeschichtet werden können, beispielsweise zwei bis sieben Lagen mit einem kumulierten Gesamtflächengewicht von z.B. 500 - 700 g/m².

Zur Ausbildung einer Verstärkung im Randbereich R1 und R2, d.h. im Bereich der Einspannung durch die Riegel 20 und 22 kann optional eine Verstärkung der Blattfeder ausgebildet werden, was in Fig. 3 verdeutlicht ist. Zusätzlich zu den unter 45° gelegten Faserlagen F45 sind im Randbereich R1 und R2 beispielsweise zwei oder vier zusätzliche Verstärkungslagen F90 vorgesehen, die bei dem dargestellten Ausführungsbeispiel als unidirektionales Gewebe ausgebildet sind, und die unter einem Winkel von 90° zu den benachbarten Rändern der Blattfeder orientiert sind. Die zusätzlichen Faserlagen F90 erstrecken sich dabei über die durch eine gestrichelte Linie dargestellten Einspannungen bzw. Riegel hinaus in Richtung eines Bereichs zwischen den beiden Einspannungen.

Fig. 4 verdeutlicht eine weitere Ausführungsform von Blattfedern 14 oder 16, bei denen die Blattfeder wiederum durch Faserlagen F45 gebildet ist. Zur Verstärkung sind in den Endbereichen der Blattfeder zusätzliche Fasern F0/90 eingearbeitet, deren Fasern unter einem Winkel von 0 und 90° zu den Rändern der Blattfeder verlaufen. Wie dabei Fig. 4 verdeutlicht, variiert die Anzahl der Fasern pro Flächeneinheit von den Faserlagen F0/90. Genauer gesagt nimmt die Faseranzahl pro Flächeneinheit in Richtung der Mitte der Blattfeder ab, da in dieser Richtung einige der F0 Fasern entfernt sind, die unter einem Winkel von 0° zu den beiden Einspannungsrändern R1 und R2 orientiert sind.

Fig. 5 und Fig. 6 zeigen eine Art Querschnittsansicht durch die verschiedenen Faserlagen einer Blattfeder mit Verstärkung. Hierbei sind bei der Ausführungsform von Fig. 5 Verstärkungslagen von außen auf innere Faserlagen der Blattfeder aufgelegt. Bei dem Ausführungsbeispiel von Fig. 6 befinden sich die Verstärkungslagen jeweils zwischen einer äußeren Faserlage und einer inneren Faserlage.

## Patentansprüche

1. Ultraschallbearbeitungsvorrichtung, umfassend eine Sonotrode (10), die auf einer Basis (12) in Längsrichtung verschieblich gelagert ist, wobei die Lagerung zumindest zwei Blattfedern (14, 16) umfasst, die an zwei gegenüberliegenden Seiten (R1, R2) eingespannt sind, aus faserverstärktem Kunststoff hergestellt sind und die Sonotrode (10) mit der Basis (12) gelenkig verbinden,
**dadurch gekennzeichnet,**
**dass** die Blattfedern (14, 16) aus carbonfaserverstärktem Kunststoff hergestellt sind, ein anisotrop verteiltes Elastizitätsmodul aufweisen und im Bereich der Einspannung (20, 22) mit einer Verstärkung versehen sind.

2. Vorrichtung nach Anspruch 1,
**dadurch gekennzeichnet,**
**dass** das Elastizitätsmodul in Richtung der Dicke der Blattfedern geringer als quer dazu ist.

3. Vorrichtung nach Anspruch 1 oder 2,
**dadurch gekennzeichnet,**
**dass** die Blattfedern (14, 16) Carbonfasern (F45) aufweisen, die unter 45° zu den Seiten der Blattfeder orientiert sind.

4. Vorrichtung nach Anspruch 1,
**dadurch gekennzeichnet,**
**dass** die Verstärkung in Richtung der Mitte der Blattfeder (14, 16) insbesondere gleichmäßig abnimmt.

5. Vorrichtung nach Anspruch 1 oder 4,
**dadurch gekennzeichnet,**
**dass** die Verstärkung durch zusätzliche Faserlagen (F90, F0/90) gebildet ist.

6. Vorrichtung nach einem der vorstehenden Ansprüche 1, 4 oder 5,
**dadurch gekennzeichnet,**
**dass** die Verstärkung Faserlagen (F45, F90, F0/90) mit verschiedener Orientierung aufweist.

7. Vorrichtung nach einem der vorstehenden Ansprüche 1 oder 4 - 6,
**dadurch gekennzeichnet,**
**dass** die Verstärkung Faserlagen (F0/90) aufweist, deren Faseranzahl pro Flächeneinheit variiert, insbesondere in einer Richtung abnimmt.

8. Vorrichtung nach einem der vorstehenden Ansprüche 1 oder 4 - 7,
**dadurch gekennzeichnet,**
**dass** die Verstärkung unidirektionale Faserlagen mit unterschiedlichen Längen aufweist.

9. Vorrichtung nach einem der vorstehenden Ansprüche 1 oder 4 - 8,
**dadurch gekennzeichnet,**
**dass** Faserlagen der Verstärkung unter einer äußersten Faserlage angeordnet sind.

10. Vorrichtung nach einem der vorstehenden Ansprüche 1 oder 4 - 9,
**dadurch gekennzeichnet,**
**dass** Faserlagen der Verstärkung zwischen Faserlagen eingebettet sind.

11. Vorrichtung nach einem der vorstehenden Ansprüche 1 oder 4 - 10,
**dadurch gekennzeichnet,**
**dass** sich die Verstärkung in einen Bereich zwischen den beiden Einspannungen (20, 22) hinein erstreckt.

12. Vorrichtung nach einem der vorstehenden Ansprüche,
**dadurch gekennzeichnet,**
**dass** die Blattfedern (14, 16) nicht vorgespannt sind.

13. Vorrichtung nach einem der vorstehenden Ansprüche,
**dadurch gekennzeichnet,**
**dass** zumindest eine Blattfeder (14, 16) im Bereich einer Einspannung formschlüssig fixiert ist.

14. Vorrichtung nach einem der vorstehenden Ansprüche,
**dadurch gekennzeichnet,**
**dass** die Blattfedern (14, 16) zumindest zwei Lagen Carbonfasern mit einem Gesamtflächengewicht von 500 - 700 g/m² aufweisen.

## Claims

1. An ultrasonic machining apparatus comprising a sonotrode (10) which is displaceably supported on a base (12) in a longitudinal direction, wherein the support comprises at least two leaf springs (14, 16) which are clamped at two oppositely disposed sides (R1, R2), which are manufactured from fiber-reinforced plastic, and which connect the sonotrode (10) to the base (12) in an articulated manner,
**characterized in that**
the leaf springs (14, 16) are manufactured from carbon fiber-reinforced plastic and have an anisotropically distributed modulus of elasticity and are provided with a reinforcement in the region of the clamping (20, 22).

2. An apparatus in accordance with claim 1,
**characterized in that**
the modulus of elasticity is lower in the direction of the thickness of the leaf springs than transversely thereto.

3. An apparatus in accordance with claim 1 or claim 2,
**characterized in that**
the leaf springs (14, 16) have carbon fibers (F45) which are oriented at 45° to the sides of the leaf spring.

4. An apparatus in accordance with claim 1,
**characterized in that**
the reinforcement in particular decreases uniformly in the direction of the center of the leaf spring (14, 16).

5. An apparatus in accordance with claim 1 or claim 4,
**characterized in that**
the reinforcement is formed by additional fiber layers (F90, F0/90).

6. An apparatus in accordance with any one of the preceding claims 1, 4 or 5,
**characterized in that**
the reinforcement has fiber layers (F45, F90, F0/90) having different orientations.

7. An apparatus in accordance with any one of the preceding claims 1 or 4 to 6,
**characterized in that**
the reinforcement has fiber layers (F0/90) whose number of fibers per unit area varies, in particular decreases in one direction.

8. An apparatus in accordance with any one of the preceding claims 1 or 4 to 7,
**characterized in that**
the reinforcement has unidirectional fiber layers having different lengths.

9. An apparatus in accordance with any one of the preceding claims 1 or 4 to 8,
**characterized in that**
fiber layers of the reinforcement are arranged below an outermost fiber layer.

10. An apparatus in accordance with any one of the preceding claims 1 or 4 to 9,
**characterized in that**
fiber layers of the reinforcement are embedded between fiber layers.

11. An apparatus in accordance with any one of the preceding claims 1 or 4 to 10,
**characterized in that**
the reinforcement extends into a region between the two clampings (20, 22).

12. An apparatus in accordance with any one of the preceding claims,
**characterized in that**
the leaf springs (14, 16) are not preloaded.

13. An apparatus in accordance with any one of the preceding claims,
**characterized in that**
at least one leaf spring (14, 16) is fixed in a form-fitted manner in the region of a clamping.

14. An apparatus in accordance with any one of the preceding claims,
**characterized in that**
the leaf springs (14, 16) have at least two layers of carbon fibers having a total weight per unit area of 500 - 700 g/m².

## Revendications

1. Dispositif de traitement par ultrasons, comprenant une sonotrode (10) montée de manière à pouvoir coulisser longitudinalement sur une base (12), le montage comprenant au moins deux ressorts à lames (14, 16) serrés sur deux côtés opposés (R1, R2), fabriqués en matière plastique renforcée par des fibres et reliant en articulation la sonotrode (10) à la base (12),
**caractérisé en ce que**
les ressorts à lames (14, 16) sont fabriqués en matière plastique renforcée par des fibres de carbone, présentent un module d'élasticité réparti de manière anisotrope, et sont pourvus d'un renforcement au niveau du serrage (20, 22).

2. Dispositif selon la revendication 1,
**caractérisé en ce que**
le module d'élasticité est plus faible dans la direction de l'épaisseur des ressorts à lames que transversalement à celle-ci.

3. Dispositif selon la revendication 1 ou 2,
**caractérisé en ce que**
les ressorts à lames (14, 16) comprennent des fibres de carbone (F45) orientées à 45° par rapport aux côtés du ressort à lames.

4. Dispositif selon la revendication 1,
**caractérisé en ce que**
le renforcement diminue, en particulier régulièrement, en direction du centre du ressort à lames (14, 16).

5. Dispositif selon la revendication 1 ou 4,
**caractérisé en ce que**
le renforcement est formé par des couches de fibres supplémentaires (F90, F0/90).

6. Dispositif selon l'une des revendications précédentes 1, 4 ou 5,
**caractérisé en ce que**
le renforcement comprend des couches de fibres (F45, F90, F0/90) ayant des orientations différentes.

7. Dispositif selon l'une des revendications précédentes 1 ou 4 à 6,
**caractérisé en ce que**
le renforcement comprend des couches de fibres (F0/90) dont le nombre de fibres par unité de superficie varie, en particulier diminue dans une direction.

8. Dispositif selon l'une des revendications précédentes 1 ou 4 à 7,
**caractérisé en ce que**
le renforcement comprend des couches de fibres unidirectionnelles de longueurs différentes.

9. Dispositif selon l'une des revendications précédentes 1 ou 4 à 8,
**caractérisé en ce que**
des couches de fibres du renforcement sont disposées sous une couche de fibres la plus extérieure.

10. Dispositif selon l'une des revendications précédentes 1 ou 4 à 9,
**caractérisé en ce que**
des couches de fibres du renforcement sont intégrées entre des couches de fibres.

11. Dispositif selon l'une des revendications précédentes 1 ou 4 à 10,
**caractérisé en ce que**
le renforcement s'étend jusque dans une zone située entre les deux serrages (20, 22).

12. Dispositif selon l'une des revendications précédentes,
**caractérisé en ce que**
les ressorts à lames (14, 16) ne sont pas précontraints.

13. Dispositif selon l'une des revendications précédentes,
**caractérisé en ce que**
au moins un ressort à lames (14, 16) est fixé par coopération de forme au niveau d'un serrage.

14. Dispositif selon l'une des revendications précédentes,
**caractérisé en ce que**
les ressorts à lames (14, 16) présentent au moins deux couches de fibres de carbone d'un poids surfacique total de 500 à 700 g/m².
